# EUROPÄISCHE PATENTANMELDUNG

(11) **EP 2 881 630 A1**
(43) Veröffentlichungstag der Anmeldung: **10.06.2015**
(21) Anmeldenummer: 14004044.5
(22) Anmeldetag: 01.12.2014
(51) Int. Cl.: F16J 15/16, F16J 15/32, F16J 15/56

(54) **Abstreifring und Abstreiferanordnung**

(30) Priorität: 04.12.2013 DE 102013020621
(71) Anmelder: Carl Freudenberg KG, 69469 Weinheim (DE)
(72) Erfinder: Vukovic, Igor, 34613 Schwalmstadt (DE)

(57) **Zusammenfassung**

Abstreifring, umfassend eine umgebungsseitige erste Stirnseite (1) und eine mediumsseitige zweite Stirnseite (2) sowie zumindest zwei in axialer Richtung mit Abstand benachbart zueinander angeordnete Abstreiflippen (3, 4), wobei eine der Abstreiflippen (3) als umgebungsseitige erste Abstreiflippe (5) und eine der Abstreiflippen (4) als mediumsseitige zweite Abstreiflippe (6) ausgebildet ist und wobei eine der Abstreiflippen (6) als Ventilabstreiflippe (7) ausgebildet ist und ein Gelenk (8) umfasst, um das die Ventilabstreiflippe (7) schwenkbar angeordnet ist. Die zweite Abstreiflippe (6) ist als Ventilabstreiflippe (7) ausgebildet, wobei die Ventilabstreiflippe (7) umgebungsseitig durch eine erste gedachte Radialebene (9) begrenzt ist, wobei das Gelenk (8) umgebungsseitig durch eine zweite gedachte Radialebene (10) und mediumsseitig durch eine dritte gedachte Radialebene (11) begrenzt ist, wobei die zweite Stirnseite (2) eine im Wesentlichen C-förmig ausgebildete, mediumsseitig axial offene, ringförmig in sich geschlossen ausgebildete Vertiefung (12) aufweist und wobei die Vertiefung (12) einen Scheitelpunkt (13) aufweist, der axial zwischen der ersten (9) und der zweiten Radialebene (10) angeordnet ist.

## Beschreibung

### Technisches Gebiet

Die Erfindung betrifft einen Abstreifring, umfassend eine umgebungsseitige erste Stirnseite und eine mediumsseitige zweite Stirnseite sowie zumindest zwei in axialer Richtung mit Abstand benachbart zueinander angeordnete Abstreiflippen, wobei eine der Abstreiflippen als umgebungsseitige erste Abstreiflippe und eine der Abstreiflippen als mediumsseitige zweite Abstreiflippe ausgebildet ist und wobei eine der Abstreiflippen als Ventilabstreiflippe ausgebildet ist und ein Gelenk umfasst, um das die Ventilabstreiflippe schwenkbar angeordnet ist.

### Stand der Technik

Ein solcher Abstreifring ist aus der DE 82 25 484 U1 bekannt. Der vorbekannte Abstreifring ist als sogenannter Doppelabstreifer ausgebildet, wobei die umgebungssertig erste Abstreiflippe als Ventilabstreiflippe ausgebildet ist und Verunreinigungen von der Oberfläche einer einfahrenden Stange abstreift und dadurch vom abzudichtenden Raum fern hält. Der Abstreifring weist einen ständig offenen Kanal auf, der den abzudichtenden Raum und den axialen Zwischenraum zwischen der ersten Abstreiflippe und der zweiten Abstreiflippe strömungsleitend miteinander verbindet. Der Druck, der im abzudichtenden Raum herrscht, herrscht daher auch im Zwischenraum zwischen den mit Abstand benachbart zueinander angeordneten Abstreiflippen. Wächst der Druck im Zwischenraum über ein bestimmtes Maß, wird die umgebungsseitige erste Abstreiflippe von der Oberfläche der abzudichtenden Stange abgehoben, so dass der Überdruck entweichen kann. Die Ventilabstreiflippe hat die Funktion eines Rückschlagventils, so dass, nachdem der Überdruck abgebaut ist, die Ventilabstreiflippe die Oberfläche der abzudichtenden Stange wieder umschließt und keine Verunreinigungen aus der Umgebung in den Zwischenraum und anschließend möglicherweise in den abzudichtenden Raum eindringen können.

Die Ventilabstreiflippe ist mit ihrem Gelenk an einem massiven Grundkörper des Abstreifrings festgelegt, der aus dem Dichtungswerkstoff besteht, so dass die radiale Nachgiebigkeit und daraus resultierend die Öffnungscharakteristik der Ventilabstrefflippe für manche Anwendungsfälle, nämlich im Fall einer staubigen bzw. schmutzigen Umgebung, beispielsweise Kiesgrube, Steinbruch oder ähnliches, wenig zufriedenstellend ist.

### Darstellung der Erfindung

Der Erfindung liegt die Aufgabe zugrunde, einen Abstreifring der eingangs genannten Art derart weiterzuentwickeln, dass die radiale Nachgiebigkeit und die Öffnungscharakteristik der Ventilabstreiflippe besser an die jeweiligen Gegebenheiten des Anwendungsfalles angepasst werden können.

Diese Aufgabe wird erfindungsgemäß durch einen Abstreifring mit den Merkmalen von Anspruch 1 gelöst.

Auf vorteilhafte Ausgestaltungen nehmen die Unteransprüche Bezug.

Zur Lösung der Aufgabe ist es vorgesehen, dass die zweite Abstreiflippe als Ventilabstreiflippe ausgebildet ist, dass die Ventilabstreiflippe umgebungsseitig durch eine erste gedachte Radialebene begrenzt ist, dass das Gelenk umgebungsseitig durch eine zweite gedachte Radialebene und mediumsseitig durch eine dritte gedachte Radialebene begrenzt ist, dass die zweite Stirnseite eine im Wesentlichen C-förmig ausgebildete, mediumsseitig axial offene, ringförmig in sich geschlossen ausgebildete Vertiefung aufweist und dass die Vertiefung einen Scheitelpunkt aufweist, der axial zwischen der ersten und der zweiten Radialebene angeordnet ist.

Durch die Gestalt der C-förmig ausgebildeten Vertiefung können die radiale Nachgiebigkeit und die Öffnungscharakteristik der Ventilabstreiflippe besonders gut an die jeweiligen Gegebenheiten des Anwendungsfalls angepasst werden. Radiale Verlagerungen der translatorisch hin und her beweglichen Stange, bezogen auf den Abstreifring, und bestimmte relative Überdrücke, bei denen die Ventilabstreiflippe öffnen soll, können durch die Gestalt der Vertiefung gleichermaßen berücksichtigt werden, so dass ein diesbezüglich optimierter Abstreifring herstellbar ist.

Dadurch, dass die zweite Abstreiflippe als Ventilabstreiflippe ausgebildet ist, kann abzudichtendes Medium, das axial zwischen den beiden Abstreiflippen angeordnet, ist beim Ausfahren der abzudichtenden Stange als Schmierfilm für die erste Abstreiflippe genutzt werden.

Die Vertiefung kann im Wesentlichen parabelförmig ausgebildet sein. Durch eine derart gerundete Ausbildung der Vertiefung weist der Abstreifring gute Gebrauchseigenschaften während einer langen Gebrauchsdauer auf, weil die Gebrauchsdauer verringernde Kerbspannungen im Bereich der Vertiefung auf ein Minimum begrenzt sind.

Der Scheitelpunkt kann, in axialer Richtung betrachtet, näher an der zweiten als an der ersten Radialebene angeordnet sein. Für die meisten Anwendungsfälle hat sich eine solche Ausgestaltung als vorteilhaft bewährt. Die radiale Nachgiebigkeit ist bei einer solchen Ausgestaltung ausreichend groß, um auch Exzentrizitäten der abzustreifenden Stange, bezogen auf den Abstreifring, ausgleichen zu können, ohne wegen einer zu großen Nachgiebigkeit in radialer Richtung befürchten zu müssen, dass die Ventilabstreiflippe von der abzustreifenden Oberfläche auch dann abhebt, wenn der anliegende relative Überdruck dafür eigentlich noch nicht groß genug ist.

Es hat sich als vorteilhaft bewährt, wenn die Vertiefung ein Verhältnis aus axialer Tiefe und radialer Höhe, jeweils von der dritten Radialebene aus betrachtet, aufweist, das 0,3 bis 0,9 beträgt. Bei einer zu tief gestalteten Vertiefung besteht die Gefahr, dass die erste Abstreiflippe bei steigendem Druck den Kontakt zur abzudichtenden Stange verliert und von der Stange abhebt, während die Ventilabstreiflippe noch im Kontakt mit der Stange ist. Ist die Vertiefung demgegenüber zu flach gestaltet, bzw. überhaupt nicht vorhanden, dann ist der Öffnungsdruck der Ventilabstreiflippe zu groß, was dazu führen kann, dass der Abstreifring aus seinem Einbauraum herausgedrückt wird.

Die erste Abstreiflippe und die Ventilabstreiflippe sind axial in Richtung Umgebung Seite gleichsinnig geneigt angeordnet. Durch die Ausrichtung sowohl der ersten Abstreiflippe als auch der Ventilabstreiflippe axial in Richtung Umgebung ergibt sich eine funktionstechnische Reihenschaltung der Abstreiflippen. Liegt mediumsseitig der Ventilabstreiflippe ein Differenzdruck an, der einen bestimmten Schwellwert überschreitet, hebt die Ventilabstreiflippe kurzzeitig von der Oberfläche der abzustreifenden Stange ab, so lange, bis der Schwellwert wieder unterschritten ist. Anschließend umschließt die Ventilabstreiflippe die Oberfläche der Stange wieder umfangsseitig anliegend. Weiter wird zu der Funktion Folgendes ausgeführt:
Bei einem kurzen Druckimpuls auf der dem abzudichtenden Raum axial zugewandten Seite des Abstreifrings oder einem Druck, der dem
Öffnungsdruck der Ventilabstreiflippe entspricht, hebt die Ventilabstreiflippe von der abzudichtenden Stange ab. Dadurch kann der Raum axial zwischen den beiden Abstreiflippe mit dem abzudichtenden Medium gefüllt werden und der Druck fällt dadurch unter den Öffnungsdruck der Ventilabstreiflippe und diese schließt wieder, d.h., sie umschließt die abzudichtende Stange anliegend. Das abzudichtende Medium wird nun als Schmiermittel für die erste Abstreiflippe genutzt. Der Öffnungsdruck der ersten Abstreiflippe ist größer, als der Öffnungsdruck der Ventilabstreiflippe, so dass sichergestellt ist, dass vor einem Öffnen der ersten Abstreiflippe immer zuerst die Ventilabstreiflippe öffnet.

Die erste Abstreiflippe und die Ventilabstreiflippe können einstückig ineinander übergehend und materialeinheitlich ausgebildet sein. Dadurch ist der Abstreifring einfach und kostengünstig herstellbar.

Davon abweichend besteht auch die Möglichkeit, dass die erste Abstreiflippe und die Ventilabstreiflippe aus voneinander abweichenden Werkstoffen bestehen. Dadurch können die erste Abstreiflippe und die Ventilabstreiflippe bezüglich ihrer Gebrauchseigenschaften und Gebrauchsdauer besonders gut an den jeweiligen Anwendungsfall angepasst werden.

Außenumfangsseitig kann ein im Wesentlichen L-förmiger Stützring mit einem Axialvorsprung und einem Radialvorsprung angeordnet sein, wobei der Stützring kreisringförmig in sich geschlossen ausgebildet ist. Durch den Stützring kann der Abstreifring besonders zuverlässig und dauerhaltbar in einem Gehäuse festgelegt werden. Der Stützring besteht dabei weiter bevorzugt aus einem Blech. Ein solcher Stützring relaxiert auch während einer langen Gebrauchsdauer des Abstreifrings nicht, so dass eine optimale Zuordnung des Abstreifrings zum Gehäuse während der gesamten Gebrauchsdauer des Abstreifrings gegeben ist. Ein Wandern des Abstreifrings aus seinem Einbauraum heraus ist dadurch praktisch ausgeschlossen. Der Axialvorsprung kann kontinuierlich anliegend an eine eine Gehäusebohrung begrenzende Wandung eines Gehäuses anlegbar sein. Kanalförmige Durchbrechungen oder Ausnehmungen weist der Axialvorsprung nicht auf. Die Herstellung des Stützrings und dadurch des gesamten Abstreifrings ist dadurch wirtschaftlich günstig und fertigungstechnisch einfach.

Der Radialvorsprung kann mit einer statischen Dichtung verbunden sein, die statisch dichtend an ein Gehäuse anlegbar ist. Der Radialvorsprung hat außerdem die Aufgabe, die Montage des Abstreifrings in die Gehäusebohrung des Gehäuses zu vereinfachen. Der Abstreifring wird in axialer Richtung so lange in die Gehäusebohrung des Gehäuses eingepresst, bis der Radialvorsprung das Gehäuse, im beschriebenen Fall mittels der statischen Dichtung, anliegend berührt. Die korrekte Positionierung des Abstreifrings im Gehäuse ist dadurch vereinfacht und Montagefehler sind auf ein Minimum reduziert.

Die erste Abstreiflippe ist bevorzugt keilförmig ausgebildet. Dabei ist von Vorteil, dass Verunreinigungen bei einem Einfahren der Stange wirkungsvoll von deren Oberfläche abgestreift werden und dass die erste Abstreiflippen eine gute Dauerhaltbarkeit aufweist. Beim Ausfahren der Stange begünstigt die Keilform der ersten Abstreiflippe die Ausbildung eines wirkungsvollen Schmierfilms.

Außerdem betrifft die Erfindung eine Abstreiferanordnung, umfassend einen Abstreifring, wie zuvor beschrieben, der eine translatorisch hin und her bewegliche Stange mit der ersten Abstreiflippe und der Ventilabstreiflippe unter elastischer Vorspannung anliegend umschließt, wobei die Ventilabstreiflippe zum Abbau eines relativen Überdrucks in einem abzudichtenden Raum von der abzustreifenden Oberfläche der Stange differenzdruckbedingt abhebbar ist. Eine Abstreiferanordnung, die einen Abstreifring umfasst, der eine translatorisch hin und her bewegliche Stange unter elastischer Vorspannung anliegend umschließt, wobei eine der Abstreiflippen als Ventilabstreiflippe ausgebildet ist, ist aus der eingangs genannten DE 82 25 484 U1 bekannt. Dem Abstreifring ist auf der dem abzudichtenden Raum axial zugewandten Seite ein Dichtring benachbart zugeordnet, wobei der innerhalb des abzudichtenden Raums herrschende Druck auf den Dichtring wirkt. Auf der dem abzudichtenden Raum axial abgewandten Seite des Dichtrings ist der Abstreifring angeordnet, wobei auf diesem Abstreifring ein niedrigerer Druck, bezogen auf den Druck im abzudichtenden Raum, herrscht, im allgemeinen Atmosphärendruck. Zwischen dem Dichtring und dem Abstreifring kann sich ein relativer Überdruck aufbauen, bezogen auf die Umgebung, wenn das abzudichtende Medium den Dichtungsring passiert und von der mediumsseitigen Abstreiflippe am Austritt gehindert wird.

Um das zu verhindern, führt ein ständig offener Kanal vom Zwischenraum zwischen dem Dichtring und dem Abstreifring in den Zwischenraum axial zwischen den Abstreiflippen. Bei Überschreitung eines Schwellwerts wird die umgebungsseitige Ventilabstreiflippe von der Gegenfläche abgehoben, so dass der Überdruck entweichen kann. Diese äußere Ventilabstreiflippe hat die Funktion eines Rückschlagventils, so dass kein Medium und keine Verunreinigungen aus der Umgebung in den Zwischenraum zwischen den Abstreiflippen eindringen können.

Der ständig offene Kanal ist konstruktiv vergleichsweise aufwändig.

Die erfindungsgemäße Abstreiferanordnung soll einfacher und kostengünstiger herstellbar sein.

Dazu ist ein Abstreifring, wie zuvor beschrieben, vorgesehen, der eine translatorisch hin und her bewegliche Stange mit der ersten Abstreiflippe und der Ventilabstreiflippe unter elastischer Vorspannung anliegend berührt, wobei die Abstreiflippe zum Abbau eines relativen Überdrucks in einem abzudichtenden Raum von der abzustreifenden Oberfläche der Stange differenzdruckbedingt abhebbar ist.

Bei einem kurzen Druckimpuls auf der dem abzudichtenden Raum axial zugewandten Seite des Abstreifrings oder einem Druck, der dem Öffnungsdruck der Ventilabstreiflippe entspricht, hebt die Ventilabstreiflippe von der abzudichtenden Stange ab. Dadurch kann der Raum axial zwischen den beiden Abstreiflippen mit dem abzudichtenden Medium gefüllt werden und der Druck fällt dadurch unter den Öffnungsdruck der Ventilabstreiflippe und diese schließt wieder, d.h., sie umschließt die abzudichtende Stange anliegend. Das abzudichtende Medium wird nun als Schmiermittel für die erste Abstreiflippe genutzt. Der Öffnungsdruck der ersten Abstreiflippe ist größer, als der Öffnungsdruck der Ventilabstreiflippe, so dass sichergestellt ist, dass vor einem Öffnen der ersten Abstreiflippe immer zuerst die Ventilabstreiflippe öffnet.

Der Abstreifring kann mittels eines Stützrings unmittelbar an einer eine Gehäusebohrung in einem Gehäuse begrenzenden Wandung festgelegt sein, wobei der Stützring die Wandung umfangsseitig ununterbrochen anliegend berührt. Die Außenumfangsfläche des Stützrings liegt ohne Unterbrechung an der Wandung an, die die Gehäusebohrung begrenzt. Eine exakte Zuordnung des Abstreifrings zum Gehäuse ist durch diese dauerhaltbare und zuverlässige Festlegung des Abstreifrings in der Gehäusebohrung während der gesamten Gebrauchsdauer sichergestellt.

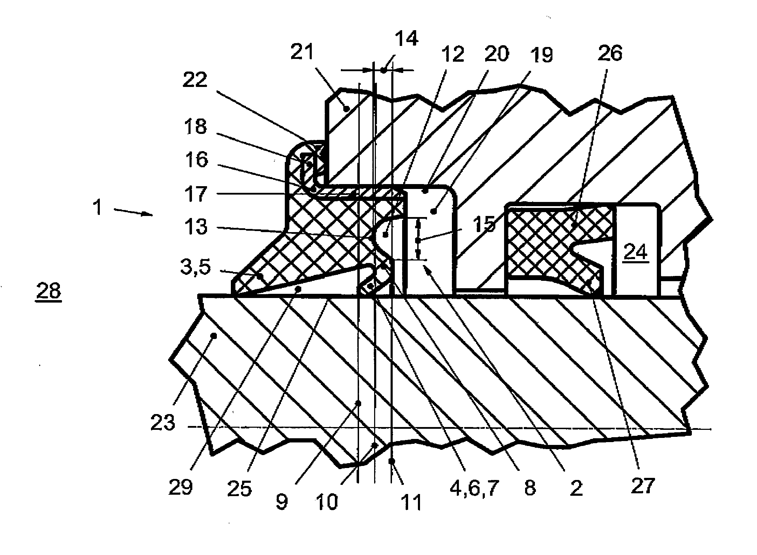

### Kurzbeschreibung der Zeichnung

Ein Ausführungsbeispiel einer erfindungsgemäßen Abstreiferanordnung mit dem erfindungsgemäßen Abstreifring ist nachfolgend anhand der Figur näher erläutert.

### Ausführung der Erfindung

In der Figur ist ein Ausführungsbeispiel der erfindungsgemäßen Abstreiferanordnung mit dem erfindungsgemäßen Abstreifring in schematischer Darstellung gezeigt.

Die Stange 23 ist außenumfangsseitig mit radialem Abstand vom Gehäuse 21 umschlossen, wobei in dem durch den Abstand gebildeten Spalt der Abstreifring und ein Dichtring 26 angeordnet sind. Der Dichtring 26 ist auf der dem abzudichtenden Raum 24 zugewandten Seite des Abstreifrings angeordnet und umschließ die abzustreifende Oberfläche 25 mit der Dichtlippe 27 unter radialer Vorspannung dichtend. Die Dichtlippe 27 ist dynamisch beansprucht, dadurch, dass die Stange 23 translatorisch hin und her beweglich ist.

Auf der der Umgebung 28 axial zugewandten Seite des Dichtrings 26 ist der Abstreifring angeordnet, der mittels seines Stützrings 16 in die Gehäusebohrung 19 des Gehäuses 21 eingepresst ist. Der Axialvorsprung 17 des Stützrings 16 berührt dabei die die Gehäusebohrung 19 begrenzende Wandung 20 unmittelbar anliegend. Die statische Dichtung 22, die den Radialvorsprung 18 des Stützrings 16 umschließt, stützt sich statisch dichtend am Gehäuse 21 ab.

Der Abstreifring hat im hier gezeigten Ausführungsbeispiel zwei in axialer Richtung mit Abstand benachbart zueinander angeordnete Abstreiflippen 3, 4. Eine der Abstreiflippen 3, nämlich die umgebungsseitige erste Abstreiflippe 5, sorgt dafür, dass bei einfahrender Stange 23 Verunreinigungen bereits in der Umgebung 28 abgestreift werden und dadurch nicht an der ersten Abstreiflippe 5 vorbei in Richtung des abzudichtenden Raums 24 gelangen. Eine der Abstreiflippe 4, nämlich die mediumsseitige zweite Abstreiflippe 6, ist als Ventilabstreiflippe 7 ausgebildet und um das Gelenk 8 schwenkbar.

Für die Funktion der Ventilabstreiflippe 7 wesentlich sind die Anordnung und die Gestalt der Vertiefung 12, und zwar in Relation zur Ausgestaltung der Ventilabstreiflippe 7 und des Gelenks 8.

Die Ventilabstreiflippe 7 ist umgebungsseitig durch die erste gedachte Radialebene 9 begrenzt, das Gelenk 8 ist umgebungsseitig durch die zweite gedachte Radialebene 10 begrenzt und mediumsseitig durch die dritte gedachte Radialeben 11. Im Bereich der mediumsseitigen zweiten Stirnseite 2 ist die mediumsseitig offene, ringförmig in sich geschlossen ausgebildete Vertiefung 12 angeordnet, wobei der Scheitelpunkt 13 der Vertiefung 12 axial zwischen der ersten 9 und der zweiten Radialebene 10 angeordnet ist.

Bei einem Druckanstieg auf der dem abzudichtenden Raum 24 axial zugewandten Seite des Abstreifrings, der höher als der Öffnungsdruck der Ventilabstreiflippe 7 ist, hebt die Ventilabstreiflippe 7 von der abzustreifenden Oberfläche 25 der Stange 23 ab. Das abzudichtende Medium, beispielsweise ein Fluid, strömt in einem solchen Fall in den Raum 29, der sich axial zwischen der ersten Abstreiflippe 3, 5 und der Ventilabstreiflippe 7 befindet. Dadurch sinkt der Druck auf der dem abzudichtenden Raum 24 axial zugewandten Seite des Abstreifrings, so dass sich die Ventilabstreiflippe 7 umfangseitig wieder an die abzudichtende Oberfläche 25 der Stange 23 angelegt. Die Vertiefung 12 und deren Abmessungen, insbesondere die axiale Tiefe 14 und die radiale Höhe 15 sowie deren Verhältnis zueinander beeinflussen die Öffnungscharakteristik der Ventilabstreiflippe 7.

Im hier gezeigten Ausführungsbeispiel ist der Scheitelpunkt 13, in axialer Richtung betrachtet, näher an der zweiten 10 als an der ersten Radialebene 9 angeordnet, wobei die Vertiefung 12 ein Verhältnis aus axialer Tiefe 14 und radialer Höhe 15, jeweils von der dritten Radialebene 11 aus betrachtet, aufweist, das 0,5 beträgt.

Die Ventilabstreiflippe 7 hat außerdem die Aufgabe, dass sie im normalen Betriebszustand, also dann, wenn sie die Stange 23 anliegend umschließt, bei ausfahrender Stange 23 den Restfluidfilm auf der Oberfläche 25 der Stange 23 reduziert.

## Patentansprüche

1. Abstreifring, umfassend eine umgebungsseitige erste Stirnseite (1) und eine mediumsseitige zweite Stirnseite (2) sowie zumindest zwei in axialer Richtung mit Abstand benachbart zueinander angeordnete Abstreiflippen (3, 4), wobei eine der Abstreiflippen (3) als umgebungsseitige erste Abstreiflippe (5) und eine der Abstreiflippe (4) als mediumsseitige zweite Abstreiflippe (6) ausgebildet ist und wobei eine der Abstreiflippen (6) als Ventilabstreiflippe (7) ausgebildet ist und ein Gelenk (8) umfasst, um das die Ventilabstreiflippe (7) schwenkbar angeordnet ist, **dadurch gekennzeichnet, dass** die zweite Abstreiflippe (6) als Ventilabstreiflippe (7) ausgebildet ist, dass die Ventilabstreiflippe (7) umgebungsseitig durch eine erste gedachte Radialebene (9) begrenzt ist, dass das Gelenk (8) umgebungsseitig durch eine zweite gedachte Radialebene (10) und mediumsseitig durch eine dritte gedachte Radialebene (11) begrenzt ist, dass die zweite Stirnseite (2) eine im Wesentlichen C-förmig ausgebildete, mediumsseitig axial offene, ringförmig in sich geschlossen ausgebildete Vertiefung (12) aufweist und dass die Vertiefung (12) einen Scheitelpunkt (13) aufweist, der axial zwischen der ersten (9) und der zweiten Radialebene (10) angeordnet ist.

2. Abstreifring nach Anspruch 1, **dadurch gekennzeichnet, dass** die Vertiefung (12) im Wesentlichen parabelförmig ausgebildet ist.

3. Abstreifring nach einem der Ansprüche 1 oder 2, **dadurch gekennzeichnet, dass** der Scheitelpunkt (13), in axialer Richtung betrachtet, näher an der zweiten (10) als an der ersten Radialebene (9) angeordnet ist.

4. Abstreifring nach einem der Ansprüche 1 bis 3, **dadurch gekennzeichnet, dass** die Vertiefung (12) ein Verhältnis aus axialer Tiefe (14) und radialer Höhe (15), jeweils von der dritten Radialebene (11) aus betrachtet, aufweist, das 0,3 bis 0,9 beträgt.

5. Abstreifring nach einem der Ansprüche 1 bis 4, **dadurch gekennzeichnet, dass** die erste Abstreiflippe (5) und die Ventilabstreiflippe (7) gleichsinnig geneigt angeordnet sind.

6. Abstreifring nach einem der Ansprüche 1 bis 5, **dadurch gekennzeichnet, dass** die erste Abstreiflippe (5) und die Ventilabstreiflippe (7) einstückig ineinander übergehend und materialeinheitlich ausgebildet sind.

7. Abstreifring nach einem der Ansprüche 1 bis 6, **dadurch gekennzeichnet, dass** außenumfangsseitig ein im Wesentlichen L-förmiger Stützring (16) mit einem Axialvorsprung (17) und einem Radialvorsprung (18) angeordnet ist und dass der Stützring (16) kreisringförmig in sich geschlossen ausgebildet ist.

8. Abstreifring nach Anspruch 7, **dadurch gekennzeichnet, dass** der Axialvorsprung (17) kontinuierlich anliegend an eine eine Gehäusebohrung (19) begrenzende Wandung (20) eines Gehäuses (21) anlegbar ist.

9. Abstreifring nach Anspruch 8, **dadurch gekennzeichnet, dass** der Radialvorsprung (18) mit einer statischen Dichtung (22) verbunden ist, die statisch dichtend an ein Gehäuse (21) anlegbar ist.

10. Abstreifring nach einem der Ansprüche 1 bis 9, **dadurch gekennzeichnet, dass** die erste Abstreiflippe (5) keilförmig ausgebildet ist.

11. Abstreiferanordnung, umfassend einen Abstreifring nach einem der Ansprüche 1 bis 10, der eine translatorisch hin und her bewegliche Stange (23) mit der ersten Abstreiflippe (5) und der Ventilabstreiflippe (7) unter elastischer Vorspannung anliegend umschließt, wobei die Ventilabstreiflippe (7) zum Abbau eines relativen Überdrucks in einem abzudichtenden Raum (24) von der abzustreifenden Oberfläche (25) der Stange (23) differenzdruckbedingt abhebbar ist.

12. Abstreiferanordnung nach Anspruch 11, **dadurch gekennzeichnet, dass** der Abstreifring mittels seines Stützrings (16) unmittelbar an einer eine Gehäusebohrung (19) in einem Gehäuse (21) begrenzenden Wandung (20) festgelegt ist und dass der Stützring (16) die Wandung (20) umfangseitig ununterbrochen anliegend berührt.
